# EUROPÄISCHE PATENTSCHRIFT

(11) **EP 0 968 104 B1**
(45) Veröffentlichungstag und Bekanntmachung des Hinweises auf die Patenterteilung: **09.01.2002**
(21) Anmeldenummer: 98919044.2
(22) Anmeldetag: 02.03.1998
(51) Int. Cl.: B60R 21/20, B60R 16/00

(54) **ANORDNUNG ZUR HUPBETÄTIGUNG BEI MODULINTEGRIERTEN LENKRÄDERN**
ARRAY FOR ACTIVATING THE HORN IN BUILT-IN MODULAR STEERING WHEELS
CONFIGURATION DESTINEE A L'ACTIONNEMENT DU KLAXON DANS LE CAS DE VOLANTS DE DIRECTION INTEGRES DANS UN MODULE

(30) Priorität: 21.03.1997 DE 19714169
(43) Veröffentlichungstag der Anmeldung: 05.01.2000
(73) Patentinhaber: TAKATA - PETRI Aktiengesellschaft, 63743 Aschaffenburg (DE)
(72) Erfinder: REH, Stefan, D-63939 Wörth (DE); SAUER, Konrad, D-63743 Aschaffenburg (DE)
(74) Vertreter: Bärmann, Klaus, Dipl.-Ing.
(86) Internationale Anmeldenummer: DE9800666
(87) Internationale Veröffentlichungsnummer: WO9842544

(56) Entgegenhaltungen:
- DE-C- 4 430 588
- GB-A- 2 270 657
- GB-A- 2 290 267
- PATENT ABSTRACTS OF JAPAN vol. 096, no. 008, 30. August 1996 & JP 08 104197 A (SENSOR TECHNOL KK), 23. April 1996

## Beschreibung

Die Erfindung betrifft eine Anordnung zur Hupbetätigung bei modulintegrierten Lenkrädern nach dem Oberbegriff des Anspruchs 1.

Bei modulintegrierten Lenkrädern, bei denen die über der Airbageinheit liegende Airbagabdeckung Bestandteil des Lenkradkranzes ist, erfolgt die Hupenbetätigung über Hupfolien oder separate Hupenschalter. So ist aus dem DE 296 06 322 U1 eine Airbagabdeckung mit Hupenfolien bekannt, die zwischen einer zumindest abschnittsweise elastisch verformbaren Abdeckkappe und einer dem gefalteten Gassack gegenüberliegenden Rückwand, die auch als Backplate bekannt ist, liegen. Dabei sind zwei mit Abstand gegenüberliegende elektrisch leitende Folien vorhanden, deren Abstand durch nichtleitende Abstandshalter gewährleistet wird. Diese sind mit solchem Abstand zueinander angeordnet, daß sich die Folien unter Druckeinwirkung zwischen den Abstandshaltern berühren können, wodurch die Hupe betätigt wird. Die Druckeinwirkung erfolgt über eine Huptaste, die auf einem elastisch verformbaren Abschnitt der Airbagabdeckung befestigt ist. Zwischen der Rückwand und der fest montierten Airbageinheit ist eine Abstützvorrichtung vorhanden, die gewährleistet, daß die obere , an die Abdeckkappe angrenzende Folie nur bis zu einer durch die Abstützvorrichtung vorgegebenen Tiefe eingedrückt werden muß, um die untere Folie zu berühren und um damit den Hupvorgang auszulösen.

Obwohl die Zuverlässigkeit der Hupe bei dieser beschriebenen Anordnung gegenüber anderen bekannten Lenkrädern mit Hupenfolien verbessert werden konnte, besteht doch noch ein gewisses Risiko, daß sich die Hupenfolien unbeabsichtigt berühren und damit ein Hupsignal ausgelöst wird.

Weiterhin ist bei Lenkrädern, bei denen das Airbagmodul mit einer Airbagabdeckung versehen ist, die vom Lenkrad getrennt angeordnet ist, bekannt, die Airbageinheit beweglich zu lagern und an dieser einen Kontakt zur Hupenbetätigung anzubringen. Durch Druck auf die Airbagabdeckung wird die Airbageinheit verschoben und dadurch der Kontakt auf den Gegenkontakt gedrückt, wodurch der Hupvorgang ausgelöst wird.

Der Erfindung liegt die Aufgabe zugrunde, die Hupenbetätigung bei modulintegrierten Lenkrädern zu verbessern.

Erfindungsgemäß wird das gemäß den Merkmalen des Anspruchs 1 erreicht.

Bei einer Anordnung zur Hupbetätigung bei modulintegrierten Lenkrädern, bei denen die über der Airbageinheit liegende Airbagabdeckung Bestandteil des Lenkradkranzes ist, ist erfindungsgemäß vorgesehen, daß die Airbageinheit mit mindestens einem daran befestigten Hupenkontakt an mindestens einem Abschnitt des Lenkrades befestigt ist, der in Richtung des zugehörigen Gegenkontaktes elastisch verformbar ist. Insbesondere ist vorgesehen, daß die Airbageinheit an mindestens einem elastisch verformbaren Abschnitt der Airbagabdeckung angebracht ist.

Während bei modulintegrierten Lenkrädern die Airbageinheiten bisher fest montiert wurden, und damit für die Betätigung der Hupe nicht verwendbar waren, ist das nunmehr durch die Verschiebbarkeit der Airbageinheit möglich. Die Verschiebung der Airbageinheit erfolgt durch Druckeinwirkung auf die Airbagabdeckung, die ebenfalls elastisch verformbar ist. Dadurch ist die Zuverlässigkeit der Hupenbetätigung in gleicher Weise gewährleistet, wie bei einer verschiebbaren Airbageinheit mit vom Lenkrad getrennter Airbagabdeckung.

In einer Ausführungsform weisen die Airbagabdeckung und der sich anschließende Lenkradkranz einen elastisch verformbaren Kunststoffeinleger auf, der mit mindestens einem Verbindungsteil für die Befestigung eines Generatorträgers der Airbageinheit versehen ist, wobei der Kunststoffeinleger auf der der Airbageinheit zugekehrten Seite von der Mitte des Lenkrades bis über das Verbindungteil hinaus umhüllungsfrei ist, und daß das Verbindungsteil ebenfalls umhüllungsfrei ist. Die außen sichtbare Seite der Airbagabdeckung und die anschließenden Bereiche des Lenkrades sind dagegen in der üblichen Weise mit einer umhüllenden Deckschicht versehen. Am Generatorträger ist ein Hupenkontakt befestigt, dem ein Gegenkontakt zugeordnet ist. Beim Niederdrücken der Airbagabdeckung wird das Verbindungsteil und damit der Generatorträger mit dem Hupenkontakt ebenfalls nach unten in Richtung des darunter liegenden Gegenkontaktes gedrückt.

Um einerseits eine ausreichende Festigkeit des Lenkrades zu erreichen, andererseits aber ein leichtes Betätigen der Hupe zu ermöglichen, ist es zweckmäßig, daß der Kunststoffeinleger im Bereich des Verbindungsteils eine geringere Dicke als im übrigen Bereich aufweist.

Es ist zweckmäßig, daß das Verbindungsteil seitlich am Lenkradskelett anliegt und gegenüber diesem verschiebbar ist. Weiterhin ist es zweckmäßig, das Verbindungsteil als geschlossenen Ring auszubilden.

In einer weiteren Ausgestaltung kann der Generatorträger für die Übertragung der Kräfte bei der Hupbetätigung mit einem umlaufenden Generatorträgerrand versehen sein, der seitlich am Verbindungsteil anliegt und sich zwischen dem Generatorträger und dem Kunststoffeinleger erstreckt, wobei das Verbindungsteil mindestens eine Auflage für den Generatorträger aufweist. Der umlaufende Generatorträgerrand ist vorzugsweise am Generatorträger angespritzt. Bei Hupbetätigung wird der Generatorträger durch den Generatorträgerrand aktiviert. Wenn das gefaltete Gassackpaket am Kunststoffeinleger anliegt, kann der Generatorträger bei Hupbetätigung auch durch das Gassackpaket aktiviert werden.

In einer zweiten Ausführungsform ist vorgesehen, daß die Airbagabdeckung mit einem elastisch verformbaren Kunststoffeinleger versehen ist, der von einer elastischen Umhüllung umgeben ist und mindestens ein Verbindungsteil aufweist, an der die Airbageinheit befestigt ist. Während der Kunststoffeinleger bei der ersten Ausführungsform gegenüber der Airbageinheit ohne Umhüllung ausgeführt ist, ist der Kunstoffeinleger in der zweiten Ausführungsform komplett eingehüllt. Die Verschiebbarkeit des Verbindungsteils gegenüber dem Lenkradskelett ist bei dieser Ausführungsform durch die elastische Verformbarkeit der Umhüllung möglich.

Die Airbagabdeckung und die Lenkradoberfläche weisen vorzugsweise eine durchgehende Umhüllung aus Polyurethan auf.

Der Hupkontakt ist vorzugsweise an der der Airbageinheit abgewandten Seite des Verbindungsteils am Generatorträger befestigt.

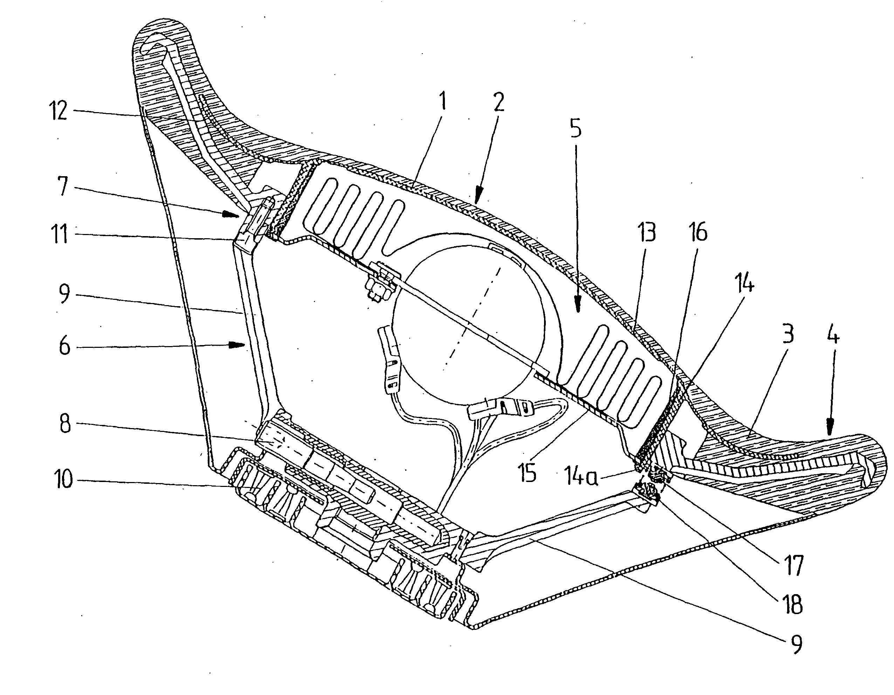

Die Erfindung soll in einem Ausführungsbeispiel anhand einer Zeichnung erläutert werden. Die Figur zeigt einen Schnitt durch ein modulintegriertes Lenkrad.

Bei diesem Lenkrad ist die Oberfläche durchgehend ausgeführt, d.h. die Deckschicht 1 der Airbagabdeckung 2 und die Deckschicht 3 des Lenkrades 4 bilden eine Einheit. Um in einem solchen Lenkrad eine Airbageinheit 5 montieren zu können, muß das Lenkrad in bekannter Weise zweiteilig ausgeführt sein. Es besteht deshalb aus einem Unterteil 6 und einem Oberteil 7. Das Unterteil 6 umfaßt im wesentlichen die Lenkradnabe 8 mit den Speichen 9 und mit einer Kontakteinheit 10.

Auf dem Unterteil 6 ist das Oberteil 7, z.B. mittels Schrauben 11 befestigt. Das Oberteil 7 umfaßt im wesentlichen das Lenkradskelett 12, das von der Deckschicht 3 umhüllt ist. In der Deckschicht 3 ist ein elastisch verformbarer Kunststoffeinleger 13 vorgesehen, der im Bereich der Airbageinheit 5 ein ringförmig um die Airbageinheit verlaufendes Verbindungsteil 14 mit Auflagen 14a für einen Generatorträger 15 der Airbageinheit 5 aufweist. Es ist erkennbar, daß der Kunststoffeinleger 13 auf der Seite, die der Airbageinheit zugekehrt ist, sowohl unmittelbar im Bereich der Airbageinheit als auch außerhalb des Verbindungsteils nicht von der Deckschicht 3 umhüllt ist. Auch das Verbindungsteil 14 weist keine Umhüllung auf. Es ist erkennbar, daß der Kunststoffeinleger 13 im Bereich des Verbindungsteils 14 eine geringere Dicke als in den übrigen Bereichen aufweist. Damit ist ein leichtes Niederdrücken der Airbagabdeckung 2 möglich.

Der Generatorträger 15 ist mit einem angespritzten, umlaufenden Generatorträgerrand 16 versehen und liegt auf mehreren Auflagen 14a des Verbindungsteils 14 auf. Der Generatorträgerrand 16 erstreckt sich zwischen dem Generatorträger 15 und dem Kunststoffeinleger 13 und liegt am Verbindungsteil 14 an. Somit kann der Generatorträgerrand 16 die für die Betätigung der Hupkontakte notwendigen Kräfte übertragen.

Außerhalb des für die Airbageinheit 5 vorgesehenen Raumes, der durch das ringförmige Verbindungsteil 14 begrenzt ist, ist am Generatorträger 15 ein elektrischer Kontakt 17 vorgesehen, dem ein Gegenkontakt 18 zugeordnet ist, der an einer Speiche 9 befestigt ist.

Wird in der Mitte auf die Airbagabdeckung 2 ein Druck ausgeübt, drückt sich diese wegen des elastisch verformbaren Kunststoffeinlegers 13 nicht nur dort nach unten sondern auch im Bereich des Generatorträgerrandes 16. Da das Verbindungsteil nicht mit dem Lenkradskelett 12 verbunden ist, kann es mit dem Generatorträgerrand 16 nach unten gedrückt werden. Mit dem Genratorträgerrand 16 wird auch der Generatorträger 15 und der an diesem befestigte Kontakt 17 nach unten gedrückt, bis die Kontakte 17, 18 geschlossen sind, wodurch das Hupsignal ausgelöst wird. Dabei wird der Generatorträger 15 gegen eine nicht dargestellte Feder bewegt, die zwischen dem Generatorträger 15 und dem Lenkradskelett vorgesehen ist.

Für den Fall, daß das gefaltete Gassackpaket 19 am Kunststoffeinleger 13 anliegt, wird der Generator bei Hubbetätigung auch durch das Gassackpaket 19 aktiviert.

Da der Abstand der Kontakte größer ist als der Abstand der bisher bei modulintegrierten Lenkrädern verwendeten Folien, ist die Gefahr einer unbeabsichtigten Hupenbetätigung geringer. Andererseits kann durch die Wahl der Dicke des Kunststoffeinlegers im Bereich des Verbindungsteils die gewünschte Druckstärke, die zur Betätigung der Hupe ausgeübt werden muß, eingestellt werden.

## Patentansprüche

1. Anordnung zur Hupbetätigung bei modulintegrierten Lenkrädern, bei denen die über der Airbageinheit liegende Airbagabdeckung Bestandteil des Lenkradkranzes ist,
**dadurch gekennzeichnet,**
**daß** die Airbageinheit (5) mit mindestens einem daran befestigten Hupenkontakt (17) an mindestens einem Abschnitt des Lenkrades (4) befestigt ist, der in Richtung des zugehörigen Gegenkontaktes (18) elastisch verformbar ist.

2. Anordnung nach Anspruch 1, **dadurch gekennzeichnet, daß** die Airbageinheit (5) an mindestens einem elastisch verformbaren Abschnitt der Airbagabdekkung (2) angebracht ist.

3. Anordnung nach Anspruch 1 oder 2, **dadurch gekennzeichnet, daß** die Airbagabdeckung (2) und der sich anschließende Lenkradkranz (4) einen elastisch verformbaren Kunststoffeinleger (13) aufweisen, der mit mindestens einem Verbindungsteil (14) für die Befestigung eines Generatorträgers (15) der Airbageinheit versehen ist, wobei der Kunststoffeinleger (13) auf der der Airbageinheit (5) zugekehrten Seite von der Mitte des Lenkrades bis über das Verbindungteil (14) hinaus umhüllungsfrei ist, und daß das Verbindungsteil (14) ebenfalls umhüllungsfrei ist.

4. Anordnung nach Anspruch 3, **dadurch gekennzeichnet, daß** der Kunststoffeinleger (13) im Bereich des Verbindungsteils (14) eine geringere Dicke als im übrigen Bereich aufweist.

5. Anordnung nach mindestens einem der vorhergehenden Ansprüche , **dadurch gekennzeichnet, daß** das Verbindungsteil (14) seitlich am Lenkradskelett (12) anliegt und gegenüber diesem verschiebbar ist.

6. Anordnung nach mindestens einem der vorhergehenden Ansprüche, **dadurch gekennzeichnet, daß** das Verbindungsteil (14) als geschlossener Ring ausgebildet ist.

7. Anordnung nach mindestens einem der vorhergehenden Ansprüche, **dadurch gekennzeichnet, daß** der Generatorträger (15) mit einem umlaufenden Generatorträgerrand (16) versehen ist, der seitlich am Verbindungsteil (14) anliegt und sich zwischen dem Generatorträger (15) und dem Kunststoffeinleger (13) erstreckt und daß das Verbindungsteil (14) mindestens eine Auflage (14a) für den Generatorträger (15) aufweist.

8. Anordnung nach Anspruch 7, **dadurch gekennzeichnet, daß** der umlaufende Generatorträgerrand (16) am Generatorträger (15) angespritzt ist.

9. Anordnung nach Anspruch 1, **dadurch gekennzeichnet, daß** die Airbagabdeckung mit einem elastisch verformbaren Kunststoffeinleger versehen ist, der von einer elastischen Umhüllung umgeben ist und mindestens ein Verbindungsteil aufweist, an der die Airbageinheit befestigt ist.

10. Anordnung nach mindestens einem der vorhergehenden Ansprüche, **dadurch gekennzeichnet, daß** die Airbagabdeckung (2) und die Oberfläche des Lenkrades (4). eine durchgehende Umhüllung aus Polyurethan aufweisen.

11. Anordnung nach mindestens einem der vorhergehenden Ansprüche, **dadurch gekennzeichnet, daß** der Hupkontakt (17) an der der Airbageinheit (5) abgewandten Seite des Verbindungsteils (14) am Generatorträger (15) befestigt ist.

## Claims

1. Arrangement for the activation of a horn in the case of built-in modular steering wheels wherein the airbag cover lying above the airbag unit is a constituent part of the steering wheel rim,
**characterised in that**
the airbag unit (5) is fixed with at least one horn contact (17) fixed thereon on at least one section of the steering wheel (4) which is elastically deformable in the direction of the associated counter contact (18).

2. Arrangement according to claim 1 **characterised in that** the airbag unit (5) is attached to at least one elastically deformable section of the airbag cover (2).

3. Arrangement according to claim 1 or 2 **characterised in that** the airbag cover (2) and the adjoining steering wheel rim (4) have an elastically deformable plastics insert (13) which is provided with at least one connecting part (14) for the fixing of a generator support (15) of the airbag unit wherein the plastics insert (13) is free of covering on the side facing the airbag unit (5) from the centre of the steering wheel up to beyond the connecting part (14) and that the connecting part (14) is likewise free of covering.

4. Arrangement according to claim 3 **characterised in that** the plastics insert (13) has reduced thickness in the area of the connecting part (14) than in the remaining area.

5. Arrangement according to at least one of the preceding claims **characterised in that** the connecting part (14) adjoins the steering wheel skeleton (12) at the side and is displaceable opposite same.

6. Arrangement according to at least one of the preceding claims **characterised in that** the connecting part (14) is formed as a closed ring.

7. Arrangement according to at least one of the preceding claims **characterised in that** the generator support (15) is provided with a circumferential generator support edge (16) which adjoins the connecting part (14) at the side and extends between the generator support (15) and the plastics insert (13) and that the connecting part (14) has at least one support bearing (14a) for the generator support (15).

8. Arrangement according to claim 7 **characterised in that** the circumferential generator support edge (16) is injection moulded on the generator support (15).

9. Arrangement according to claim 1 **characterised in that** the airbag cover is provided with an elastically deformable plastics insert which is enclosed by an elastic cover and has at least one connecting part on which the airbag unit is fixed.

10. Arrangement according to at least one of the preceding claims **characterised in that** the airbag cover (2) and the surface of the steering wheel (4) have a continuous cover of polyurethane.

11. Arrangement according to at least one of the preceding claims **characterised in that** the horn contact (17) is fixed on the generator support on the side of the connecting part (14) remote from the airbag unit (5).

## Revendications

1. Configuration destinée à l'actionnement de l'avertisseur dans des volants de direction intégrés dans un module et dans lesquels la coiffe du coussin de sécurité gonflable, placée au-dessus de l'ensemble unitaire à coussin de sécurité gonflable, fait partie intégrante de la couronne du volant de direction,
**caractérisée par le fait**
**que** l'ensemble unitaire (5) à coussin de sécurité gonflable est fixé, par au moins un contact (17) d'avertisseur fixé audit ensemble, à au moins un segment du volant de direction (4) qui est élastiquement déformable dans la direction du contact complémentaire (18) associé.

2. Configuration selon la revendication 1, **caractérisée par le fait que** l'ensemble unitaire (5) à coussin de sécurité gonflable est installé sur au moins un segment, élastiquement déformable, de la coiffe (2) du coussin de sécurité gonflable.

3. Configuration selon la revendication 1 ou 2, **caractérisée par le fait que** la coiffe (2) du coussin de sécurité gonflable, et la couronne adjacente (4) du volant de direction, présentent une pièce intégrée (13) en matière plastique élastiquement déformable, munie d'au moins une pièce de liaison (14) pour la fixation d'un support (15) de générateur de l'ensemble unitaire à coussin de sécurité gonflable, ladite pièce intégrée (13) en matière plastique étant dépourvue d'enrobage sur le côté tourné vers ledit ensemble unitaire (5) à coussin de sécurité gonflable, depuis le centre du volant de direction jusqu'au-delà de la pièce de liaison (14) ; et **par le fait que** ladite pièce de liaison (14) est pareillement dépourvue d'enrobage.

4. Configuration selon la revendication 3, **caractérisée par le fait que** la pièce intégrée (13) en matière plastique présente une épaisseur moindre, dans la région de la pièce de liaison (14), que dans la région restante.

5. Configuration selon au moins l'une des revendications précédentes, **caractérisée par le fait que** la pièce de liaison (14) porte latéralement contre la carcasse (12) du volant de direction, et peut coulisser par rapport à cette dernière.

6. Configuration selon au moins l'une des revendications précédentes, **caractérisée par le fait que** la pièce de liaison (14) est réalisée sous la forme d'un anneau fermé.

7. Configuration selon au moins l'une des revendications précédentes, **caractérisée par le fait que** le support (15) du générateur est doté d'un bord périphérique (16) appliqué latéralement contre la pièce de liaison (14), et s'étendant entre ledit support (15) du générateur et la pièce intégrée (13) en matière plastique ; et **par le fait que** la pièce de liaison (14) comporte au moins un appui (14a) destiné audit support (15) du générateur.

8. Configuration selon la revendication 7, **caractérisée par le fait que** le bord périphérique (16) du support du générateur est venu de moulage solidaire avec ledit support (15) du générateur.

9. Configuration selon la revendication 1, **caractérisée par le fait que** la coiffe du coussin de sécurité gonflable est pourvue d'une pièce intégrée en matière plastique élastiquement déformable qui est entourée d'un enrobage élastique, et présente au moins une pièce de liaison fixée à l'ensemble unitaire à coussin de sécurité gonflable.

10. Configuration selon au moins l'une des revendications précédentes, **caractérisée par le fait que** la coiffe (2) du coussin de sécurité gonflable, et la surface du volant de direction (4), possèdent un enrobage ininterrompu en polyuréthanne.

11. Configuration selon au moins l'une des revendications précédentes, **caractérisée par le fait que** le contact (17) de l'avertisseur est fixé au support (15) du générateur, du côté de la pièce de liaison (14) qui est tourné à l'opposé de l'ensemble unitaire (5) à coussin de sécurité gonflable.
